# Europäisches Patentamt

# European Patent Office

# Office européen des brevets

(19)

(11) Numéro de publication : **0 362 003 B1**

(12) **FASCICULE DE BREVET EUROPEEN**

(45) Date de publication du fascicule du brevet :
**15.04.92 Bulletin 92/16**

(51) Int. Cl.⁵ : **B60T 8/18, B60T 8/30**

(21) Numéro de dépôt : **89402374.6**

(22) Date de dépôt : **31.08.89**

(54) **Compensateur double de freinage.**

(30) Priorité : **30.09.88 FR 8812861**

(43) Date de publication de la demande :
**04.04.90 Bulletin 90/14**

(45) Mention de la délivrance du brevet :
**15.04.92 Bulletin 92/16**

(84) Etats contractants désignés :
**DE ES FR GB IT**

(56) Documents cités :
**DE-A- 2 627 166**
**FR-A- 2 258 992**
**GB-A- 2 067 695**

(73) Titulaire : **BENDIX EUROPE Services
Techniques S.A.
126 rue de Stalingrad
F-93700 Drancy (FR)**

(72) Inventeur : **Le Normand, Pascal
Bendix France S.A. 126 Rue de Stalingrad
F-93700 Drancy (FR)**
Inventeur : **Levrai, Roland
Bendix France S.A. 126 Rue de Stalingrad
F-93700 Drancy (FR)**

EP 0 362 003 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

# Description

La présente invention concerne un compensateur double destiné à être utilisé dans un double circuit hydraulique de freinage d'un véhicule automobile.

De tels compensateurs sont utilisés dans les véhicules automobiles pour permettre de moduler la pression hydraulique appliquée aux moteurs de freins de roues arrière en fonction de la charge sur l'essieu arrière. Ces compensateurs sont constitués classiquement d'une soupape soumise à l'action d'un ressort taré pour soustraire le circuit arrière à toute augmentation de pression au dessus d'une valeur prédéterminée. Le tarage du ressort est variable en fonction de la charge que porte le train arrière du véhicule grâce à un levier monté pivotant sur un axe fixé sur le compensateur et dont la position est représentative de la distance entre un élément de carosserie et un élément du train arrière.

On connaît, par le document FR-A-2 306 107 un correcteur double de freinage, comportant dans un boîtier unique deux valves correctrices dont les entrées sont destinées à être reliées séparément à deux sources indépendantes de pression de freinage, et les sorties à deux jeux indépendants de moteurs de freins, chaque valve correctrice étant susceptible de controler les valeurs des pressions à son entrée et à sa sortie suivant une relation préétablie et comportant un piston asservi à des moyens élastiques de rappel. Dans ce correcteur double, une commande mécanique est disposée entre les pistons des valves correctrices et les moyens élastiques, l'organe d'entrée de la commande mécanique étant soumis à la force engendrée par les moyens élastiques de rappel, alors que les organes de sortie coopérent séparément avec les pistons des deux valves correctrices.

En cas de défaillance totale d'un des circuits de freinage associé à l'une des valves correctrices, la pression de freinage est modifiée dans le circuit intact, de façon réglable et peut être même doublée. La défaillance d'un circuit est ainsi surmontée, permettant au conducteur du véhicule d'arrêter ce dernier, alors que cette défaillance d'un circuit est signalée par ailleurs au conducteur par un indicateur de chute de pression de type connu.

De tels correcteurs agissent donc comme des systèmes de sécurité lors d'une défaillance dans un circuit, mais il peut arriver que ces correcteurs eux-même tombent en défaillance, et que cette défaillance ne soit pas signalée au conducteur. Ce sera par exemple le cas lorsque le moyen élastique de rappel est rompu ou relaché, l'organe d'entrée de la commande mécanique est grippé, l'un des clapets ne ferme pas ou présente des fuites, etc...

La présente invention a donc pour objet de prévoir un correcteur de freinage, avec détection de défaillances incorporée, pour signaler au conducteur du véhicule, par exemple par l'allumage d'un témoin lumineux au tableau de bord, toute dégradation éventuelle dans le fonctionnement du correcteur de freinage.

Dans ce but, l'invention propose un compensateur double de freinage pour véhicule automobile, comportant deux valves correctrices dont les entrées sont destinées à être séparément reliées à deux sources indépendantes de pression de freinage, et les sorties à deux moteurs de freins indépendants, chaque valve correctrice étant susceptible de contrôler les valeurs des pressions à son entrée et à sa sortie suivant une relation préétablie et comportant un piston asservi par un organe d'entrée à des moyens élastiques de rappel, le correcteur double étant caractérisé en ce qu'il comporte des moyens pour comparer les positions des organes d'entrée.

L'invention sera mieux comprise et ses avantages ressortiront clairement à la lecture qui va suivre d'un exemple de réalisation, en référence aux dessins dans lesquels :

La Figure 1 est une vue en coupe d'un correcteur double de freinage selon l'invention,

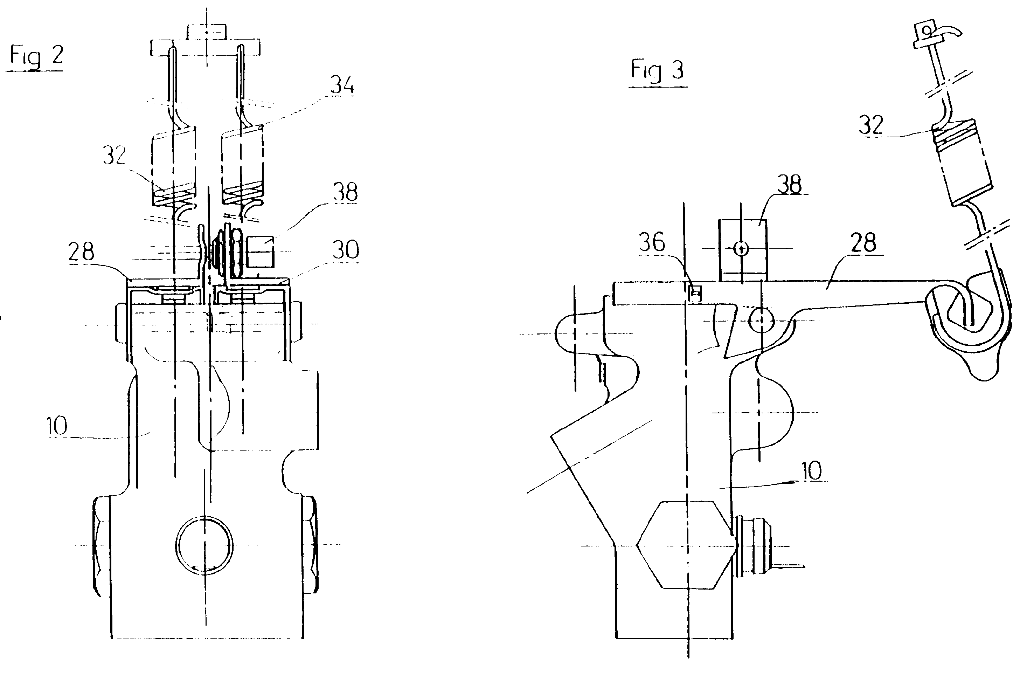

La Figure 2 est une vue de face du compensateur de la Figure 1, et

La Figure 3 est une vue de côté de ce même compensateur.

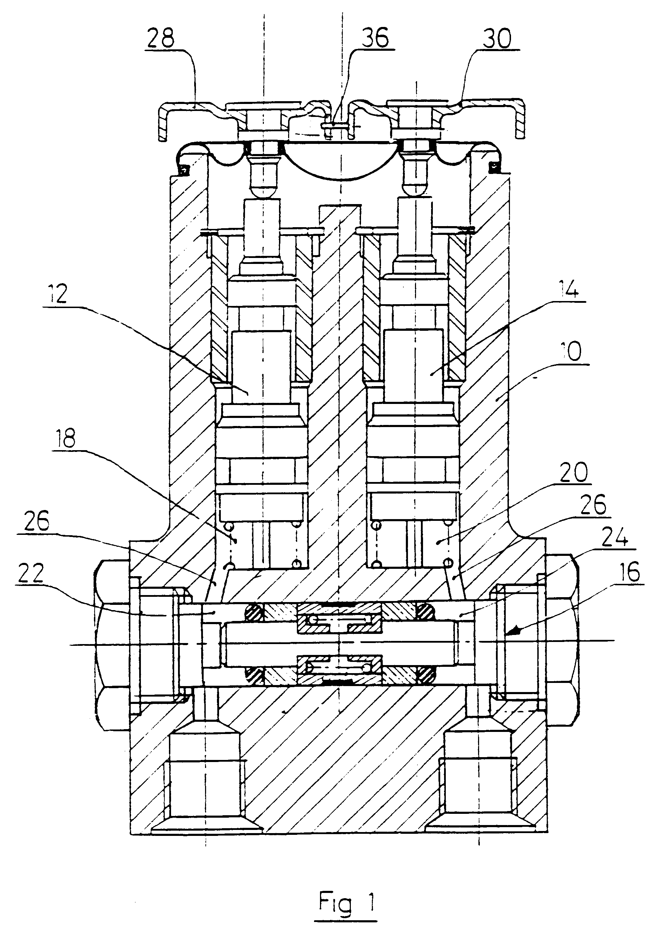

On a représenté sur la Figure 1 un compensateur double tel qu'illustré par exemple par le document précité, et dans lequel les moyens de l'invention sont mis en oeuvre pour signaler au conducteur du véhicule la défaillance du compensateur lui-même.

Sur les Figures, la référence 10 désigne le boîtier d'un compensateur double de freinage dans lequel sont disposées deux valves correctrices de freinage 12 et 14. Dans un montage classique, du type du brevet précité, les deux valves correctrices sont commandées par une commande mécanique unique agissant sur elles en fonction de la charge sur l'essieu arrière.

Conformément à l'invention, la défaillance du fonctionnement mécanique du compensateur double est détectée et signalée au conducteur du véhicule. Pour ce faire, l'invention prévoit de doter chacune des valves correctrices de son organe d'entrée, lui-même soumis à l'action de ses propres moyens élastiques de rappel. Ainsi, les valves correctrices 12 et 14 ont chacune leur organe d'entrée ou levier de commande 28,30 respectivement, et non plus un levier de commande unique, comme dans le brevet FR-A-2 306 107 précité. Ainsi, chaque valve 12,14 correctrice est commandée chacune par son propre levier 28,30 lui même commandé par son propre ressort de liaison à la suspension 32,34 respectivement.

Pour détecter et signaler les disfonctionnements mécaniques du compensateur double, l'invention prévoit un dispositif de détection de l'écart angulaire entre les deux leviers de commande. Ce dispositif pourra par exemple être constitué par un minirupteur 38 placé sur l'axe d'articulation commun aux deux leviers ou à son voisinage. Un tel minirupteur de type connu, établit un contact électrique lorsque l'angle entre les deux leviers est supérieur à une valeur prédéterminée, de l'ordre de quelques degrés, indiquant ainsi une défaillance mécanique du compensateur, par exemple par l'allumage d'une lampe témoin au tableau de bord du véhicule.

On comprend ainsi que de petits écarts angulaires des leviers, courants dans le fonctionnement normal du compensateur, ne seront pas signalés, alors que l'apparition d'une défaillance mécanique sera immédiatement signalée, même dans le cas où elle est faible. Si la défaillance s'aggrave ou est importante dès son apparition, il est désirable d'augmenter le point d'intervention du circuit intact, et par conséquent accroître la pression de sortie sur ce circuit. L'invention prévoit dans ce cas de disposer un doigt 36 sur l'un ou l'autre ou sur les deux leviers, ce doigt pénétrant dans une lumière oblongue de l'autre levier, pour limiter le débattement angulaire des leviers l'un par rapport à l'autre au delà d'une valeur prédéterminée, et ainsi récupérer sur le circuit intact l'effort du ressort de pilotage du circuit défaillant.

Il est bien évident que l'on pourra prévoir, pour ce système de détection, un système à contact maintenu, de façon à ce que le témoin lumineux au tableau de bord reste allumé dès que la première détection de défaillance a eu lieu.

## Revendications

1. Compensateur double de freinage pour véhicule automobile, comportant deux valves correctrices (12,14) dont les entrées sont destinées à être séparément reliées à deux sources indépendantes de pression de freinage, et les sorties à deux moteurs de freins indépendants, chaque valve correctrice étant susceptible de contrôler les valeurs des pressions à son entrée et à sa sortie suivant une relation préétablie et comportant un piston asservi par un organe d'entrée (28,30) à des moyens élastiques de rappel (32,34), le correcteur double étant caractérisé en ce qu'il comporte des moyens pour comparer entre elles les positions des organes d'entrée (28,30) de chaque valve correctrice (12,14).

2. Compensateur double selon la revendication 1, caractérisé en ce que les organes d'entrée de chaque valve correctrice sont des leviers (28,30).

3. Compensateur double selon la revendication 2, caractérisé en ce que les moyens pour comparer entre elles les positions des organes d'entrée de chaque valve correctrice (12,14) sont constitués par un dispositif de détection de l'écart angulaire entre les deux leviers (28,30).

4. Compensateur double selon la revendication 3, le dispositif de détection de l'écart angulaire entre les deux leviers (28,30) est un minirupteur (38).

5. Compensateur double selon la revendication 4, caractérisé en ce que le minirupteur (38) établit un contact électrique lorsque l'angle entre les deux leviers (28,30) est supérieur à une valeur prédéterminée.

6. Compensateur double selon l'une des revendications 4 ou 5, caractérisé en ce que le minirupteur (38) est à contact maintenu.

7. Compensateur double selon l'une quelconque des revendications précédentes, caractérisé en ce que au moins l'un des leviers comporte un doigt (36), ce doigt pénétrant dans une lumière oblongue de l'autre levier.

## Patentansprüche

1. Doppel-Bremsausgleichseinrichtung für Kraftfahrzeug, mit zwei Korrekturventilen (12, 14), deren Eingänge dazu vorgesehen sind, mit zwei unabhängigen Bremsdruckquellen getrennt verbunden zu werden und deren Ausgänge dazu vorgesehen sind, mit zwei unabhängigen Bremsmotoren verbunden zu werden, wobei jedes Korrekturventil dazu geeignet ist, die Werte der Drücke an seinem Eingang und an seinem Ausgang entsprechend einer voreingestellten Beziehung zu steuern, und einen durch ein Eingangselement (28, 30) elastischen Rückstellmitteln (32, 34) nachgeführten Kolben aufweist, wobei die Doppel-Ausgleichseinrichtung dadurch gekennzeichnet ist, daß sie Mittel zum Vergleichen der Positionen der Eingangselemente (28, 30) eines jeden Korrekturventils (12, 14) miteinander aufweist.

2. Doppel-Ausgleichseinrichtung gemäß Anspruch 1, dadurch gekennzeichnet, daß die Eingangselemente eines jeden Korrekturventils Hebel (28, 30) sind.

3. Doppel-Ausgleichseinrichtung gemäß Anspruch 2, dadurch gekennzeichnet, daß die Mittel zum Vergleichen der Positionen der Eingangselemente eines jeden Korrekturventils (12, 14) miteinander von einer Einrichtung zur Erfassung des Winkelabstandes zwischen den zwei Hebeln (28, 30) gebildet sind.

4. Doppel-Ausgleichseinrichtung gemäß Anspruch 3, dadurch gekennzeichnet, daß die Einrichtung zur Erfassung des Winkelabstandes zwischen den zwei Hebeln (28, 30) ein Mikroschalter (38) ist.

5. Doppel-Ausgleichseinrichtung gemäß Anspruch 4, dadurch gekennzeichnet, daß der Mikroschalter (38) einen elektrischen Kontakt herstellt, wenn der Winkel zwischen den zwei Hebeln (28, 30) größer als ein vorgegebener Wert ist.

6. Doppel-Ausgleichseinrichtung gemäß einem der Ansprüche 4 oder 5, dadurch gekennzeichnet, daß der Mikroschalter (38) einen Haltekontakt aufweist.

7. Doppel-Ausgleichseinrichtung gemäß einem der vorangehenden Ansprüche, dadurch gekennzeichnet, daß wenigstens einer der Hebel einen Zapfen (36) aufweist, der in ein längliches Schlitzloch des anderen Hebels eindringt.


**Claims**

1. Dual brake compensator for a motor vehicle, comprising two correcting valves (12,14), of which inlets are intended to be connected separately to two independent brake-pressure sources and outlets to two independent brake motors, each correcting valve being capable of controlling the values of the pressures at its inlet and at its outlet according to a predetermined relation and comprising a piston subjected to elastic return means (32,34) by an inlet member (28,30), the dual corrector being characterized in that it includes means for comparing with one another the positions of the inlet members (28,30) of each correcting valve (12, 14).

2. Dual compensator according to Claim 1, characterized in that the inlet members of each correcting valve are levers (28,30).

3. Dual compensator according to Claim 2, characterized in that the means for comparing with one another the positions of the inlet members of each correcting valve (12,14) consist of a device for detecting the angular deviation between the two levers (28,30).

4. Dual compensator according to Claim 3, characterized in that the device for detecting the angular deviation between the two levers (28,30) is a microswitch (38).

5. Dual compensator according to Claim 4, characterized in that the microswitch (38) makes an electrical contact when the angle between the two levers (28, 30) is greater than a predetermined value.

6. Dual compensator according to one of Claims 4 or 5, characterized in that the microswitch (38) is of the locked-contact type.

7. Dual compensator according to any one of the preceeding claims, characterized in that at least one of the levers has a finger (36), said finger penetrating into an oblong slot in an other lever.

Fig 1

Fig 2

Fig 3

34

32

38

28

30

10

36

38

28

32

10

EP 0 362 003 B1